(19) **Europäisches Patentamt**

**European Patent Office**

**Office européen des brevets**

(11) **EP 1 199 831 B1**

(12) **FASCICULE DE BREVET EUROPEEN**

(45) Date de publication et mention
de la délivrance du brevet:
**30.08.2006 Bulletin 2006/35**

(51) Int Cl.:
***H04L 1/00*** *(2006.01)*

(21) Numéro de dépôt: **01402629.8**

(22) Date de dépôt: **11.10.2001**

(54) **Procédé d'adaptation de lien dans un système de radiocommunications mobiles**

Verfahren zur Verbindungsanpassung in einem mobilen Kommunikationssystem

Method of link adaption in a mobile radio communications system

(84) Etats contractants désignés:
**AT BE CH CY DE DK ES FI FR GB GR IE IT LI LU
MC NL PT SE TR**

(30) Priorité: **20.10.2000 FR 0013480**

(43) Date de publication de la demande:
**24.04.2002 Bulletin 2002/17**

(73) Titulaire: **ALCATEL**
**75008 Paris (FR)**

(72) Inventeur: **Agin, Pascal**
**94370 Sucy en Brie (FR)**

(74) Mandataire: **El Manouni, Josiane et al**
**COMPAGNIE FINANCIERE ALCATEL**
**Département Propriété Industrielle**
**54, rue La Boétie**
**75008 Paris (FR)**

(56) Documents cités:
**EP-A- 0 899 906          EP-A- 0 903 883**
**EP-A- 0 944 201**

• KLEIDER J E ET AL: "AN ADAPTIVE-RATE ANTI-
JAM SYSTEM FOR OPTIMAL VOICE
COMMUNICATION" MILCOM CONFERENCE
RECORD,XX,XX, 1997, pages 1103-1107,
XP000749707

**Description**

La présente invention concerne d'une manière générale les systèmes de radiocommunications mobiles.

Dans ces systèmes, des erreurs peuvent se produire lors de l'estimation des données en réception. Ces erreurs sont principalement dues à la distorsion du signal transmis, causée par les multi-trajets, le bruit thermique, et toutes les sources d'interférence.

Pour permettre au récepteur de retrouver les bits d'information émis, une redondance est généralement ajoutée, c'est-à-dire plus d'un bit est transmis par bit d'information. Cette technique est aussi appelée codage-canal, et la quantité de redondance, définie comme le rapport entre le nombre de bits d'information et le nombre de bits transmis, est aussi appelée taux de codage (le taux de codage étant ainsi un nombre compris entre 0 et 1, d'autant plus faible que la quantité de redondance est importante).

Dans le cas de transmission de données, il est nécessaire que chaque bit d'information soit reçu correctement. Cependant, même pour un taux de codage faible et des puissances de transmission élevées, des erreurs sont toujours possibles en réception dans le cas de conditions radio sévères. Ainsi, une autre technique, appelée ARQ (pour "Automatic Repeat reQuest" en anglais) est utilisée en plus de la technique de codage-canal. Elle consiste simplement à re-transmettre des blocs de bits d'information non correctement reçus par le récepteur, jusqu'à ce qu'ils soient correctement reçus. La proportion de blocs re-transmis est aussi appelée BLER (pour "Block Erasure Rate" en anglais) et dépend de façon significative du taux de codage (le BLER est une fonction croissante du taux de codage).

Ainsi, la technique de codage-canal et la technique ARQ permettent de recevoir correctement des données dans toutes les conditions radio. Cependant, un inconvénient principal de ces techniques est qu'elles utilisent une partie des ressources radio autrement que pour augmenter le débit net. On rappelle que le débit net est le débit obtenu après déduction, du débit brut (ou débit effectivement transmis sur l'interface radio), de tout ce qui n'est pas utile pour l'utilisateur, comme la redondance introduite par le codage, ou les blocs non correctement reçus.

Pour avoir un débit net le plus élevé possible, il faut donc optimiser le taux de codage. Une telle optimisation n'est pas simple car la relation entre le BLER et le taux de codage est fortement dépendante des conditions radio. En effet, quand les conditions radio sont mauvaises, un taux de codage faible est préférable pour éviter un nombre de re-transmissions excessif. Au contraire, quand les conditions radio sont bonnes, un taux de codage élevé est suffisant et permet d'avoir un débit net plus élevé.

Pour avoir un débit net optimisé pour toutes les conditions radio, plusieurs schémas de codage avec différents taux de codage sont nécessaires. Ils permettent d'adapter dynamiquement le taux de codage en fonction des conditions radio. Ainsi un schéma de codage plus robuste (c'est-à-dire ayant un taux de codage plus faible) peut être sélectionné lorsque les conditions radio se dégradent, ou inversement un schéma de codage moins robuste (c'est-à-dire ayant un taux de codage plus élevé) peut être sélectionné lorsque les conditions radio s'améliorent. Une telle technique est décrite dans le brevet EP-A-0944201. Elle est aussi appelée adaptation de lien (ou "link adaptation" en anglais).

Par exemple, quatre schémas de codage ont été spécifiés dans la norme GSM (pour "Global System for Mobile Communication" en anglais) pour le service de transmission de données en mode paquet appelé GPRS (pour "General Packet Radio Service" en anglais). Ces schémas de codage sont appelés CS1 à CS4 et ont des taux de codage allant de 0,5 à 1.

La technique d'adaptation de lien peut aussi être utilisée pour adapter dynamiquement des paramètres du système autres que le taux de codage, par exemple l'efficacité spectrale de la modulation (c'est-à-dire la capacité de la modulation à transmettre un nombre de bits plus ou moins élevé par symbole, pour une même bande de fréquence allouée). Ainsi, un schéma de modulation moins efficace, mais plus robuste, peut être sélectionné lorsque les conditions radio se dégradent, ou inversement un schéma de modulation plus efficace, mais moins robuste, peut être sélectionné lorsque les conditions radio s'améliorent.

La technique d'adaptation de lien peut aussi s'appliquer à une combinaison de schémas de codage et de modulation. Par exemple, neuf schémas de codage et de modulation (appelés MCS1 à MCS9) ont été spécifiés dans la norme GSM pour le service de transmission de données en mode paquet appelé EGPRS (pour "Enhanced General Packet Radio Service" en anglais).

La technique d'adaptation de lien peut aussi s'appliquer, dans le cas de transmission de parole, à une combinaison de schémas de codage-canal et de codage de la parole (ou codage-source). Dans ce cas, cette technique est aussi appelée AMR (pour "Adaptive Multi-Rate" en anglais).

Les conditions radio sont en général représentées par un critère radio, ou indicateur de qualité, tel que notamment le BER brut (ou "raw Bit Error Rate" en anglais), le BLER (pour "Block Erasure Rate" en anglais), le SIR (pour "Signal-to-Interference Ratio" en anglais), ...etc.

Le principe de l'adaptation de lien est généralement basé sur un système de N-1 seuils ordonnés $S_1$ à $S_{N-1}$, où N est le nombre de schémas de codage et/ou de modulation possibles $C_1$ à $C_N$. Ces seuils sont aussi appelés seuils de décision, et sont définis de manière telle que si le critère radio utilisé est compris entre les seuils $S_i$ et $S_{i+1}$ (avec i compris entre 1 et N-2), alors le schéma de codage et /ou de modulation $C_i$ est sélectionné. Si le critère radio utilisé est

inférieur au seuil $S_1$, alors le schéma de codage et /ou de modulation $C_1$ est sélectionné. Si le critère radio utilisé est supérieur au seuil $S_{N-1}$, alors le schéma de codage et /ou de modulation $C_N$ est sélectionné.

Le critère radio est généralement obtenu par des mesures appelées aussi mesures radio. Afin d'obtenir une valeur plus précise pour ce critère radio, on effectue généralement une moyenne de plusieurs résultats de mesures successifs.

Cependant, le fait d'utiliser une telle moyenne n'est pas sans inconvénient. En effet, l'adaptation est alors plus lente (puisque la moyenne ne dépend pas seulement du résultat de mesure le plus récent, mais également de résultats de mesures précédents). Il est alors très dangereux d'effectuer une moyenne sur une durée trop longue car l'adaptation risque alors de ne pas être assez rapide dans le cas de dégradation rapide des conditions radio, et les performances risquent alors d'être affectées de manière significative, c'est-à-dire la qualité risque d'être dégradée de manière significative, et la communication risque même d'être coupée.

La présente invention a notamment pour but d'éviter de tels inconvénients.

La presente invention a ainsi pour objet un procédé d'adaptation de lien dans un système de radiocommunications mobiles, ce procédé comportant une sélection de schéma de codage et/ou de modulation en fonction des conditions radio, lesdites conditions radio étant représentées par une moyenne de résultats de mesures radio, et ce procédé étant essentiellement caractérisé en ce que ladite moyenne inclut:

- une moyenne sur une durée relativement courte, pour sélectionner rapidement un schéma de codage et/ou de modulation plus robuste quand il est déterminé que les conditions radio sont rapidement dégradées,
- une moyenne sur une durée relativement plus longue, pour sélectionner un schéma de codage et/ou de modulation moins robuste ou un schéma de codage et/ou de modulation plus robuste les conditions radio ne sont pas rapidement dégradées.

Suivant une autre caractéristique, ladite sélection étant basée sur un système de seuils, lesdits seuils ont une première valeur pour déterminer si les conditions radio sont rapidement dégradées, et une deuxième valeur pour déterminer si les conditions radio ne sont pas rapidement dégradées, ladite deuxième valeur étant relativement plus élevée, ou relativement plus faible, que ladite première valeur, suivant que la valeur desdites mesures radio augmente, ou diminue, quand les conditions radio sont dégradées.

Suivant une autre caractéristique, lesdites mesures radio comportent des mesures de BER brut.

Suivant une autre caractéristique, lesdites mesures radio comportent des mesures de SIR.

Suivant une autre caractéristique, dans le cas où un des schémas de codage possibles a un taux de codage égal à 1, lesdites mesures radio, pour sélectionner un schéma de codage plus robuste à partir dudit schéma de codage ayant un taux de codage égal à 1, comportent des mesures autres que des mesures de BER brut.

Suivant une autre caractéristique, dans le cas où un des schémas de codage possibles a un taux de codage égal à 1, lesdites mesures radio, pour sélectionner ledit schéma de codage ayant un taux de codage égal à là partir d'un schéma de codage plus robuste, comportent des mesures de BER brut et des mesures autres que des mesures de BER brut.

Suivant une autre caractéristique, lesdites mesures radio autres que des mesures de BER brut comportent des mesures de SIR.

Suivant une autre caractéristique, lesdites mesures radio autres que des mesures de BER brut comportent des mesures de puissance de signal reçu.

Suivant une autre caractéristique, lorsque la transmission sur la liaison à laquelle est appliquée ladite adaptation de lien est reprise à la suite d'une interruption de transmission, et lorsque lesdites mesures n'ont pas pu être effectuées pendant l'interruption de transmission, on sélectionne le schéma de codage et/ou de modulation qui était utilisé avant l'interruption de transmission, dans le cas où la période d'interruption est relativement courte, ou un schéma de codage et/ou de modulation par défaut dans le cas contraire.

Suivant une autre caractéristique, ledit schéma de codage et/ou de modulation par défaut est un schéma de codage et/ou de modulation le plus robuste.

Suivant une autre caractéristique, ladite moyenne est obtenue au moyen d'un filtre de type exponentiel défini par un paramètre appelé facteur d'oubli, qui s'exprime directement en fonction de l'intervalle de temps entre deux mesures, ou d'une approximation de cet intervalle de temps.

Suivant une autre caractéristique, ledit filtre est défini par des relations du type:

$$y_{n+1} = \alpha^{\Delta_n} y_n + 1$$

$$AV\_M_{n+1} = \left(1 - \frac{1}{y_{n+1}}\right)AV\_M_n + \frac{1}{y_{n+1}}m_{n+1}$$

où :

- $AV\_M_{n+1}$ est la valeur de ladite moyenne AV_M après une $(n+1)^{\text{ième}}$ mesure $M_{n+1}$,
- $\Delta t_n$ désigne l'intervalle de temps entre la $n^{\text{ième}}$ et la (n+1)ièrne mesure, ou une approximation de cet intervalle de temps,
- $\alpha$ est un paramètre définissant ce filtre.

La présente invention a également pour objet un système de radiocommunications mobiles, ce système étant essentiellement caractérisé en ce qu'il comporte des moyens pour mettre en oeuvre un tel procédé d'adaptation de lien.

Suivant une autre caractéristique, ladite adaptation de lien est appliquée à une liaison montante.

Suivant une autre caractéristique, ladite adaptation de lien est appliquée à une liaison descendante.

La présente invention a également pour objet une entité de réseau de radiocommunications mobiles, cette entité étant essentiellement caractérisée en ce qu'elle comporte des moyens pour mettre en oeuvre un tel procédé d'adaptation de lien.

Suivant une autre caractéristique, ladite adaptation de lien est appliquée à une liaison montante.

Suivant une autre caractéristique, ladite adaptation de lien est appliquée à une liaison descendante.

La présente invention a également pour objet une station mobile, cette station mobile étant caractérisée en ce qu'elle comporte des moyens pour mettre en oeuvre un tel procédé d'adaptation de lien.

Suivant une autre caractéristique, ladite adaptation de lien est appliquée à une liaison descendante.

Suivant une autre caractéristique, ladite adaptation de lien est appliquée à une liaison montante.

D'autres objets et caractéristiques de la présente invention apparaîtront à la lecture de la description suivante d'exemples de réalisation, faite en relation avec les dessins ci-annexés dans lesquels :

- la figure 1 illustre un premier exemple d'application d'un procédé suivant l'invention,
- la figure 2 illustre un deuxième exemple d'application d'un procédé suivant l'invention.

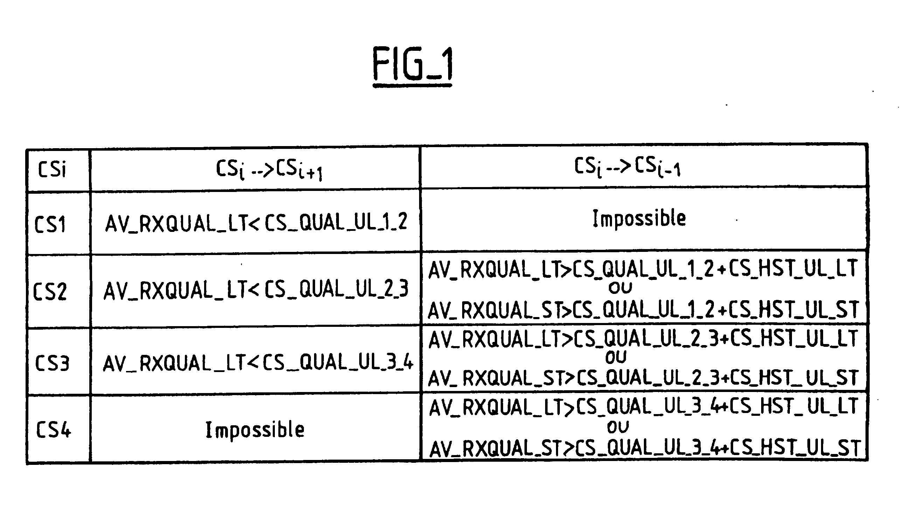

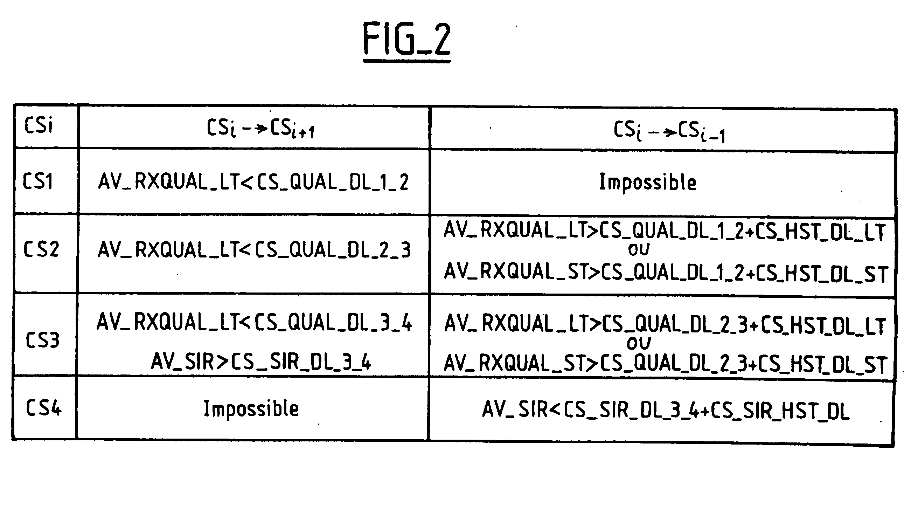

A titre d'exemple, les figures 1 et 2 correspondent au cas du système GPRS, les différents schémas possibles étant alors les schémas de codage CS1 à CS4 tels que définis dans ce système.

A titre d'exemple, la figure 1 correspond à l'adaptation de lien appliquée à une liaison montante, et la figure 2 correspond à l'adaptation de lien appliquée à une liaison descendante.

Le procédé illustré sur les figures 1 et 2 est illustré sous forme de tableau. La première colonne de ce tableau indique le schéma de codage courant $CS_i$ (avec i compris entre 1 et 4 dans l'exemple considéré du système GPRS). La deuxième colonne indique les conditions pour sélectionner le schéma de codage moins robuste $CS_{i+1}$ à partir du schéma de codage courant $CS_i$. La troisième colonne indique les conditions pour sélectionner le schéma de codage plus robuste $CS_{i-1}$ à partir du schéma de codage courant $CS_i$.

Comme indiqué précédemment, les conditions radio sont en général représentées par un critère radio, ou indicateur de qualité, tel que notamment le BER brut (ou "raw Bit Error Rate" en anglais), le BLER (pour "Block Erasure Rate" en anglais), le SIR (pour "Signal-to-Interference Ratio" en anglais), ...etc.

Des critères radio tels que le BER brut ou le SIR peuvent être considérés comme plus appropriés pour l'adaptation de lien, notamment car, contrairement au BLER, ils ne dépendent pas du schéma de codage utilisé.

Suivant un premier exemple de réalisation, illustré sur les figures 1 et 2, le critère radio est, dans tous les cas où il est possible de l'utiliser, le BER brut. Les mesures radio correspondantes sont notées RXQUAL, suivant la notation utilisée dans la Recommendation GSM 05.08 publiée par l'ETSI. Par exemple, pour les mesures reportées au réseau par la station mobile, les mesures RXQUAL sont quantifiées sur huit niveaux notés RXQUAL_0 à RXQUAL_7. La moyenne de tels résultats de mesure RXQUAL est ici notée AV_RXQUAL.

A titre d'exemple, les seuils de décision pour les liaisons montante et descendante sont différents, le seuil de décision utilisé pour sélectionner le schéma de codage $CS_{i+1}$ à partir du schéma de codage $CS_i$, sur la base des mesures RXQUAL, étant noté CS_QUAL_UL_i_i+1 pour la liaison montante, et CS_QUAL_DL_i_i+1 pour la liaison descendante.

A titre d'exemple, le seuil de décision utilisé pour sélectionner le schéma de codage $CS_i$ à partir du schéma de codage $CS_{i+1}$ est différent du seuil utilisé pour sélectionner le schéma de codage $CS_{i+1}$ à partir du schéma de codage $CS_i$. Ceci permet d'éviter des changements incessants entre les schémas de codage $CS_i$ et $CS_{i+1}$, connus aussi sous le nom de phénomène de "ping-pong". En l'occurrence, le seuil de décision utilisé pour sélectionner le schéma de codage $CS_i$ à partir du schéma de codage $CS_{i+1}$ est obtenu en ajoutant au seuil de décision utilisé pour sélectionner le schéma

de codage $CS_{i+1}$ à partir du schéma de codage $CS_i$ une valeur d'hystérésis, notée de manière générale CS_HST_UL pour la liaison montante, et CS_HST_DL pour la liaison descendante.

Dans l'exemple illustré les valeurs d'hystérésis sont les mêmes pour les différents seuils de décision. Elles pourraient cependant être différentes.

Suivant l'invention, et dans cet exemple pour la moyenne AV_RXQUAL, deux moyennes sont utilisées :

- une moyenne sur une durée relativement courte, notée AV_RXQUAL_ST, pour sélectionner rapidement un schéma de codage plus robuste dans le cas où les conditions radio sont rapidement dégradées,
- une moyenne sur une durée relativement plus longue, notée AV_RXQUAL_LT, pour sélectionner un schéma de codage moins robuste, ou un schéma de codage plus robuste dans le cas où les conditions radio ne sont pas rapidement dégradées.

En effet:

- pour sélectionner un schéma de codage moins robuste, il faut s'assurer sur une durée suffisamment longue que les conditions radio le permettent,
- par contre, lorsque les conditions radio sont rapidement dégradées, la moyenne effectuée sur une durée plus courte permet d'avoir une meilleure réactivité de l'algorithme d'adaptation de lien, c'est-à-dire de sélectionner plus rapidement un schéma de codage plus robuste, pour éviter une dégradation de performances.

Un moyen de détecter si les conditions radio sont ou non rapidement dégradées, pour la sélection plus rapide d'un schéma de codage plus robuste si les conditions radio sont rapidement dégradées, est de comparer les moyennes AV_RXQUAL_LT et AV_RXQUAL_ST à des seuils de décision différents. Dans l'exemple illustré, ces seuils de décision différents sont obtenus en prenant des valeurs d'hystérésis différentes, notées respectivement CS_HST_UL_LT et CS_HST_UL_ST pour la liaison montante (ou CS_HST_DL_LT et CS_HST_DL_ST pour la liaison descendante), avec en l'occurrence CS_HST_UL_ST < CS_HST_UL_LT pour la liaison montante (ou CS_HST_DL_ST < CS_HST_DL_LT pour la liaison descendante).

Ainsi, dans les exemples illustrés, pour la liaison montante:

- le seuil de décision pour la sélection du schéma de codage $CS_i$ à partir du schéma de codage $CS_{i+1}$, sur la base de la moyenne AV_RXQUAL_ST, est noté:

$$CS\_QUAL\_UL\_i\_i+1 \ + \ CS\_HST\_UL\_ST$$

- le seuil de décision pour la sélection du schéma de codage $CS_i$ à partir du schéma de codage $CS_{i+1}$, sur la base de la moyenne AV_RXQUAL_LT, est noté

$$CS\_QUAL\_UL\_i\_i+1 \ + \ CS\_HST\_UL\_LT.$$

Pour la liaison descendante, les expressions sont du même type, en remplaçant "UL" (pour "UpLink" en anglais) par "DL" (pour "DownLink" en anglais), dans l'expression des seuils.

Ainsi, comme illustré sur la figure 1 pour la liaison montante:

- la condition pour sélectionner le schéma de codage $CS_{i+1}$ à partir du schéma de codage $CS_i$ peut s'écrire:

$$AV\_RXQUAL\_LT \ < \ CS\_QUAL\_UL\_i\_i+1$$

- la condition pour sélectionner le schéma de codage $CS_i$ à partir du schéma de codage $CS_{i+1}$ peut s'écrire:

$$AV\_RXQUAL\_LT \ > \ CS\_QUAL\_UL\_i\_i+1 \ + \ CS\_HST\_UL\_LT$$

ou

$$AV\_RXQUAL\_ST > CS\_QUAL\_UL\_i\_i+1 + CS\_HST\_UL\_ST$$

Les expressions sont du même type sur la figure 2 pour la liaison descendante en remplaçant "UL" par "DL" dans l'expression des seuils.

Comme indiqué précédemment, dans les exemples illustrés sur les figures 1 et 2, le critère radio est, dans tous les cas où il est possible de l'utiliser, le BER brut, les résultats de mesure correspondants étant notés RXQUAL, et la moyenne de tels résultats de mesure étant notée AV_RXQUAL.

On rappelle que le BER brut est généralement obtenu en comparant des données reçues, avant décodage correcteur d'erreurs, avec des données correspondantes obtenues après décodage correcteur d'erreurs, puis re-codées au moyen du même code correcteur d'erreurs qu'en émission.

Ainsi, dans l'exemple considéré du système GPRS, où le schéma de codage CS4 a un taux de codage égal à 1, des mesures RXQUAL peuvent ne pas être possibles lorsque ce schéma de codage est utilisé. Notamment, des mesures RXQUAL peuvent ne pas être possibles lorsque les mesures sont effectuées dans la station mobile, c'est-à-dire pour le cas d'adaptation de lien appliquée à une liaison descendante. Lorque les mesures sont effectuées dans le réseau, c'est-à-dire pour le cas d'adaptation de lien appliquée à une liaison montante, d'autres mesures peuvent être effectuées (notamment des mesures de BEP (pour "Bit Error Probability" en anglais), à partir desquelles une estimation du BER brut peut être obtenue. D'une manière générale, des mesures de BEP peuvent être effectuées par le réseau et par la station mobile, et donc être disponibles pour les sens montant et descendant. Par exemple, dans le système EGPRS, la station mobile reporte au réseau des mesures de BEP (moyenne et variance sur quatre intervalles de temps (ou "time-slots" en anglais) formant un bloc appelé bloc RLC, notées MEAN_BEP et CV_BEP). Des mesures de BEP sont donc disponibles dans les sens montant et descendant (les mesures RXQUAL n'étant plus mesurées et signalées au réseau par la station mobile).

C'est pourquoi, dans l'exemple de la figure 1, qui correspond plus particulièrement au cas d'une liaison montante, le critère radio constitué par le BER brut peut être utilisé dans tous les cas. Par contre, dans l'exemple de la figure 2, qui correspond plus particulièrement au cas d'une liaison descendante, un autre critère radio est utilisé lorsque cela est nécessaire. Dans l'exemple de la figure 2 cet autre critère radio est le SIR, les mesures radio correspondantes étant ici notées SIR et la moyenne de ces mesures étant ici notée AV_SIR. Ces mesures radio peuvent être obtenues à partir de mesures de niveau d'interférence, notées I_ LEVEL_TNi suivant la notation utilisée dans la Recommendation GSM 05.08, et de mesures de niveau de signal, notées C-VALUE suivant les notations utilisées dans cette même Recommendation.

Une autre possibilité serait d'utiliser la puissance de signal reçu (les mesures radio correspondantes étant notées RXLEV dans le Recommendation GSM 05.08).

Ainsi, dans l'exemple de la figure 2, contrairement à l'exemple de la figure 1, les conditions pour sélectionner le schéma de codage CS3 à partir du schéma de codage CS4 ne sont pas basées sur le critère radio constitué par le BER brut, mais sur le SIR.

Dans ce cas, si les conditions pour la sélection du schéma de codage CS4 à partir du schéma de codage CS3 étaient les mêmes que sur la figure 1, c'est-à-dire étaient seulement basées sur le critère radio constitué par le BER brut, des phénomènes de "ping-pong" entre CS3 et CS4 pourraient se produire, dûs au fait que les conditions pourraient être simultanément réalisées pour un changement de CS3 vers CS4 et de CS4 vers CS3.

Pour éviter de tels inconvénients, la condition pour la sélection du schéma de codage CS4 à partir du schéma de codage CS3 est basée à la fois sur le critère radio constitué par le BER brut et sur le critère radio constitué par le SIR.

En outre, dans l'exemple illustré sur la figure 2:

- le seuil de décision utilisé pour la sélection du schéma de codage CS4 à partir du schéma de codage CS3, sur la base du critère radio constitué par le SIR, est noté CS_SIR_DL_3_4,
- le seuil de décision utilisé pour la sélection du schéma de codage CS3 à partir du schéma de codage CS4, sur la base du critère radio constitué par le SIR, est différent de ce dernier, et noté CS_SIR_DL_3_4 + CS_SIR_HST_DL.

Ainsi, comme illustré sur la figure 2:

- la condition pour sélectionner le schéma de codage CS4 à partir du schéma de codage CS3 peut s'écrire:

$$AV\_ RXQUAL < CS\_QUAL\_DL\_3\_4$$

et

$$AV\_SIR > CS\_SIR\_DL\_3\_4$$

- et la condition pour sélectionner le schéma de codage CS4 à partir du schéma de codage CS3 peut s'écrire:

$$AV\_SIR < CS\_SIR\_DL\_3\_4 + CS\_SIR\_HST\_DL.$$

Suivant un deuxième exemple de réalisation, un autre critère radio utilisable dans un procédé suivant l'invention serait le SIR.

Ce deuxième exemple de réalisation ne sera pas décrit plus en détail. Il se déduit du premier exemple de réalisation décrit précédemment, en remarquant que:

- dans le premier exemple de réalisation, la valeur des mesures radio augmente quand les conditions radio se dégradent, alors que dans le deuxième exemple de réalisation, la valeur des mesures radio augmente quand les conditions radio s'améliorent. Dans ce cas, si les seuils de décision ont une première valeur pour déterminer si les conditions radio sont rapidement dégradées, et une deuxième valeur pour déterminer si les conditions radio ne sont pas rapidement dégradées, ladite deuxième valeur est relativement plus élevée, ou relativement plus faible, que ladite première valeur, suivant que la valeur desdites mesures radio augmente, ou diminue, quand les conditions radio sont dégradées.
- dans le deuxième exemple de réalisation, des mesures de SIR sont possibles même lorsque le schéma de codage CS4 est utilisé.

D'autres exemples de réalisation seraient bien entendu possibles.

Le calcul de moyenne telle que, notamment, AV_RXQUAL ou AV_SIR, peut notamment être réalisé au moyen d'un filtre de type exponentiel. Un tel filtre peut être défini par la relation suivante:

$$S_n = (1-\beta) \cdot S_{n-1} + \beta \cdot m_n$$

où $S_n$ est la valeur moyenne actualisée après la $n^{\text{ième}}$ mesure $m_n$, et $\beta$ est un paramètre du filtre (appelé aussi facteur d'oubli).

Un tel filtre permet d'effectuer une moyenne avec des poids décroissants exponentiellement avec la distance par rapport à la mesure la plus récente.

Cependant un tel filtre n'est exponentiel en fonction du temps que lorsque les mesures sont espacées de manière égale dans le temps. Or cette condition n'est pas toujours réalisée, ce qui rend alors difficile le choix du paramètre $\beta$, qui nécessite en effet d'avoir des valeurs différentes suivant que les mesures sont plus ou moins espacées dans le temps.

Notamment, dans l'exemple considéré du système GPRS, un tel filtre peut être utilisé dans le réseau pour l'adaptation de lien appliquée à une liaison descendante, sur la base de mesures radio reportées au réseau par la station mobile. Notamment, une mesure RXQUAL est reportée au réseau par la station mobile dans un message d'acquittement appelé "Packet Downlink Ack/Nack" qui n'est habituellement pas reçu périodiquement par le réseau. La différence de temps entre la réception de tels messages peut par exemple aller de quelques centaines de millisecondes jusqu'à quelques secondes.

Un filtre de type exponentiel, tel que rappelé précédemment, mais tenant compte de l'intervalle de temps entre deux mesures, est connu d'après la Recommendation GSM 05.08 publiée par l'ETSI, telle que modifiée selon la contribution ETSI SMG2 2-00-0035.

Un tel filtre est décrit dans ce dernier document au moyen des deux relations suivantes:

$$z_n = (1-\beta)z_{n-1} + \beta x_n$$

$$S_n = (1 - \beta \frac{x_n}{z_n}) \cdot S_{n-1} + \beta \frac{x_n}{z_n} \cdot m_n$$

où $x_n$ est une variable destinée à indiquer si une mesure radio existe ($x_n$ étant égal à 1 si une mesure existe, ou à 0 dans le cas contraire).

Un tel filtre présente notamment l'inconvénient de devoir procéder à une actualisation de la valeur moyenne même si aucune mesure n'est disponible, et donc d'accroître la complexité de mise en oeuvre.

La présente invention a également pour objet un filtre permettant d'éviter de tels inconvénients.

Suivant l'invention, ce résultat est essentiellement atteint au moyen d'un filtre dont le facteur d'oubli s'exprime directement en fonction de l'intervalle de temps entre deux mesures, ou d'une approximation de cet intervalle de temps. Par exemple, un filtre suivant l'invention peut être défini au moyen des relations suivantes, par exemple pour la moyenne AV_RXQUAL_LT:

•

$$y_{n+1} = \alpha_{LT}{}^{\Delta t_n} y_n + 1$$

•

$$AV\_RXQUAL\_LT_{n+1} = \left(1 - \frac{1}{y_{n+1}}\right) AV\_RXQUAL\_LT_n + \frac{1}{y_{n+1}} RXQUAL_n$$

De même, un filtre suivant l'invention peut être défini au moyen des relations suivantes, par exemple pour la moyenne AV_RXQUAL_ST:

$$z_{n+1} = \alpha_{ST}{}^{\Delta t_n} z_n + 1$$

$$AV\_RXQUAL\_ST_{n+1} = \left(1 - \frac{1}{z_{n+1}}\right) AV\_RXQUAL\_ST_n + \frac{1}{z_{n+1}} RXQUAL_n$$

Dans ces expressions:

- AV_RXQUAL_ST$_n$ (respectivement AV_RXQUAL_ST$_n$) est la valeur de AV_RXQUAL_ST (respectivement AV_RXQUAL_LT) après la $n^{\text{ième}}$ mesure RXQUAL (c'est-à-dire après le $n^{\text{ième}}$ message "Packet Downlink Ack/Nack" dans le système GPRS),
- RXQUAL$_n$ est la valeur de la $n^{\text{ième}}$ mesure RXQUAL (c'est-à-dire la valeur de RXQUAL dans le $n^{\text{ième}}$ message "Packet Downlink Ack/Nack" dans le système GPRS),
- $\Delta t_n$ désigne l'intervalle de temps entre la $(n-1)^{\text{ième}}$ et la $n^{\text{ième}}$ mesure (c'est-à-dire entre le $(n-11)^{\text{ième}}$ et le $n^{\text{ième}}$ message "Packet Downlink Ack/Nack" dans le système GPRS). $\Delta t_n$ pourrait aussi désigner une approximation de l'intervalle de temps entre deux mesures. Par exemple, on pourrait souhaiter que $\Delta t_n$ soit approximé par un multiple d'un certain intervalle de temps T (T pouvant être par exemple égal à une période de bloc, soit 20ms dans les systèmes GPRS et EGPRS). En effet, du fait des déplacements de la station mobile, des décalages d'horloge de la station mobile et du réseau, ... etc, l'intervalle de temps réel peut ne pas être exactement un multiple de 20 ms.

On notera que quand $\alpha_{LT} = 0$, aucune moyenne n'est effectuée, et quand $\Delta t_n = T_{LT}$ pour toute valeur de n (c'est-à-dire quand les mesures sont reportées périodiquement avec une période T), la relation habituelle

$$AV\_RXQUAL\_LT_{n+1} = (1-\beta) \, AV\_RXQUAL\_LT_n + \beta.RXQUAL_n$$

est approximativement vérifiée après une phase d'initialisation (n suffisamment grand). Les mêmes remarques s'appliquent pour AV_RXQUAL_ST.

Pour initialiser les filtres, $y_0$ and $z_0$ doivent être mis à zéro:

$$y_0 = z_0 = 0$$

Plus généralement, un filtre permettant de calculer une moyenne AV_M serait défini par des relations du type:

- 

$$y_{n+1} = \alpha^{\Delta t_n} y_n + 1$$

- 

$$AV\_M_{n+1} = \left(1 - \frac{1}{y_{n+1}}\right) AV\_M_n + \frac{1}{y_{n+1}} m_{n+1}$$

où:

- AV_$M_{n+1}$ est la valeur de AV_M après une $(n+1)^{ième}$ mesure $m_{n+1}$,
- $\Delta t_n$ désigne l'intervalle de temps entre la $n^{ième}$ et la $(n+1)^{ième}$ mesure, ou une approximation de cet intervalle de temps,
- a est un paramètre définissant ce filtre.

En outre, la présente invention permet de résoudre un autre problème, qui est lié au fait que lorsque la transmission n'est pas continue mais est régulièrement interrompue, comme cela est souvent le cas dans la transmission de données en mode paquet, il est possible que certaines mesures utilisées pour la sélection d'un schéma de codage et/ou de modulation puissent ne pas pouvoir être effectuées pendant les périodes où la transmission est interrompue. Notamment, dans l'exemple décrit précédemment du système GPRS, pour la liaison descendante, les mesures RXQUAL ne peuvent pas être effectuées dans la station mobile lorsque la transmission dans le sens descendant est interrompue.

Le problème qui se pose alors est de sélectionner un schéma de codage et/ou de modulation lorsque la transmission reprend.

Deux solutions sont pour cela connues: par exemple dans le système GPRS, soit on utilise un schéma de codage par défaut (tel que notamment le schéma de codage CS1 qui fournit le niveau de protection est le plus important), soit on utilise des mesures autres que des mesures de RXQUAL, qui peuvent être effectuées même lorsque la transmission est interrompue. De telles mesures sont notamment des mesures de SIR, effectuées sur un canal dit de contrôle tel que notamment le canal BCCH (pour "Broadcast Control Channel" en anglais).

L'utilisation du mode de codage CS1 a essentiellement pour inconvénient de ne pas permettre dans tous les cas d'optimiser les ressources radio et donc le débit net. L'utilisation de mesures de SIR effectuées sur un canal de contrôle a essentiellement pour inconvénient de ne pas être suffisamment représentatives des mesures recherchées, notamment car le canal de contrôle n'a pas la même puissance ni la même fréquence que le canal dédié sur lequel sont effectuées les mesures RXQUAL lorsque la transmission n'est pas interrompue.

La présente invention permet également d'éviter ces inconvénients.

La présente invention propose essentiellement, lorsque la transmission est reprise à la suite d'une interruption de transmission, d'utiliser le schéma de codage et/ou de modulation qui était utilisé avant l'interruption, dans le cas où la période d'interruption est relativement courte, ou un schéma de codage et/ou de modulation par défaut (tel que notamment un schéma de codage et/ou de modulation procurant le niveau de protection le plus élevé) dans le cas contraire.

D'une manière générale, un procédé suivant l'invention peut être utilisé dans un système de radiocommunications mobiles, pour l'adaptation de lien appliquée à une liaison montante et/ou à une liaison descendante, et peut être mis en oeuvre aussi bien dans le réseau (ou dans une ou plusieurs des entités constitutives de ce réseau), que dans les stations mobiles.

Les entités constitutives du réseau (appelées ici aussi entités de réseau de radiocommunications mobiles), peuvent comporter des entités telles que:

- des stations de base, pouvant être appelées, suivant les systèmes, BTS (pour "Base Transceiver Station" en anglais), ou Node B par exemple,
- des contrôleurs de stations de base, pouvant être appelés, suivant les systèmes, BSC (pour "Base Station Controller" en anglais), ou RNC (pour "Radio Network Controller" en anglais) par exemple,
- des entités telles que, pour les systèmes GPRS et EGPRS par exemple, les entités SGSN ("Serving GPRS Support Node").

Généralement, l'adaptation de lien est implémentée dans une entité fonctionnelle appelée PCU ("Packet Channel Unit" en anglais) dans les systèmes GPRS et EGPRS, et qui peut être placée au niveau de la BTS, du BSC ou du SGSN.

## Revendications

1. Procédé d'adaptation de lien dans un système de radiocommunications mobiles, ce procédé comportant une sélection de schéma de codage et/ou de modulation en fonction des conditions radio, lesdites conditions radio étant représentées par une moyenne de résultats de mesures radio, et ce procédé étant essentiellement **caractérisé en ce que** ladite moyenne inclut:

   - une moyenne sur une durée relativement courte, pour sélectionner rapidement un schéma de codage et/ou de modulation plus robuste quand il est déterminé que les conditions radio sont rapidement dégradées,
   - une moyenne sur une durée relativement plus longue, pour sélectionner un schéma de codage et/ou de modulation moins robuste, ou un schéma de codage et/ou de modulation plus robuste quand il est déterminé que les conditions radio ne sont pas rapidement dégradées.

2. Procédé selon la revendication 1, **caractérisé en ce que** ladite sélection étant basée sur un système de seuils, lesdits seuils ont une première valeur pour déterminer si les conditions radio sont rapidement dégradées, et une deuxième valeur pour déterminer si les conditions radio ne sont pas rapidement dégradées, ladite deuxième valeur étant relativement plus élevée, ou relativement plus faible, que ladite première valeur, suivant que la valeur desdites mesures radio augmente, ou diminue, quand les conditions radio sont dégradées.

3. Procédé selon l'une des revendications 1 et 2, **caractérisé en ce que** lesdites mesures radio comportent des mesures de BER brut.

4. Procédé selon l'une des revendications 1 et 2, **caractérisé en ce que** lesdites mesures radio comportent des mesures de SIR.

5. Procédé selon l'une des revendications 1 et 2, **caractérisé en ce que**, dans le cas où un des schémas de codage possibles a un taux de codage égal à 1, lesdites mesures radio, pour sélectionner un schéma de codage plus robuste à partir dudit schéma de codage ayant un taux de codage égal à 1, comportent des mesures autres que des mesures de BER brut.

6. Procédé selon l'une des revendications 1 et 2, **caractérisé en ce que**, dans le cas où un des schémas de codage possibles a un taux de codage égal à 1, lesdites mesures radio, pour sélectionner ledit schéma de codage ayant un taux de codage égal à 1 à partir d'un schéma de codage plus robuste, comportent des mesures de BER brut et des mesures autres que des mesures de BER brut.

7. Procédé selon l'une des revendications 5 et 6, **caractérisé en ce que** lesdites mesures radio autres que des mesures de BER brut comportent des mesures de SIR.

8. Procédé selon l'une des revendications 5 et 6, **caractérisé en ce que** lesdites mesures radio autres que des mesures de BER brut comportent des mesures de puissance de signal reçu.

9. Procédé selon l'une des revendications 1 à 8, **caractérisé en ce que**, lorsque la transmission sur la liaison à laquelle est appliquée ladite adaptation de lien est reprise à la suite d'une interruption de transmission, et lorsque lesdites mesures n'ont pas pu être effectuées pendant l'interruption de transmission, on sélectionne le schéma de codage et/ou de modulation qui était utilisé avant l'interruption de transmission, dans le cas où la période d'interruption est relativement courte, ou un schéma de codage et/ou de modulation par défaut dans le cas contraire.

10. Procédé selon la revendication 9, **caractérisé en ce que** ledit schéma de codage et/ou de modulation par défaut est un schéma de codage et/ou de modulation le plus robuste.

11. Procédé selon l'une des revendications 1 à 10, **caractérisé en ce que** ladite moyenne est obtenue au moyen d'un filtre de type exponentiel défini par un paramètre appelé facteur d'oubli, qui s'exprime directement en fonction de l'intervalle de temps entre deux mesures, ou d'une approximation de cet intervalle de temps.

**12.** Procédé selon la revendication 11, **caractérisé en ce que** ledit filtre est défini par des relations du type:

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

où:
- AV_M$_{n+1}$ est la valeur de ladite moyenne AV_M après une (n+ 1)$^{ième}$ mesure m$_{n+1}$,
- $\Delta t_n$ désigne l'intervalle de temps entre la n$^{ième}$ et la (n+1)$^{ième}$ mesure, ou une approximation de cet intervalle de temps,
- $\alpha$ est un paramètre définissant ce filtre.

**13.** Système de radiocommunications mobiles, **caractérisé en ce qu'**il comporte des moyens pour mettre en oeuvre un procédé d'adaptation de lien selon l'une des revendications 1 à 12.

**14.** Système selon la revendication 13, **caractérisé en ce que** ladite adaptation de lien est appliquée à une liaison montante.

**15.** Système selon la revendication 13, **caractérisé en ce que** ladite adaptation de lien est appliquée à une une liaison descendante.

**16.** Entité de réseau de radiocommunications mobiles, comportant des moyens d'adaptation de lien, lesdits moyens d'adaptation de lien comportant des moyens de sélection de schéma de codage et/ou de modulation en fonction des conditions radio, lesdites conditions radio étant représentées par une moyenne de résultats de mesures radio, entité **caractérisée en ce qu'**elle comporte:

- des moyens pour effectuer une moyenne sur une durée relativement courte, pour sélectionner rapidement un schéma de codage et/ou de modulation plus robuste quand il est déterminé que les conditions radio sont rapidement dégradées,
- des moyens pour effectuer une moyenne sur une durée relativement plus longue, pour sélectionner un schéma de codage et/ou de modulation moins robuste, ou un schéma de codage et/ou de modulation plus robuste quand il est déterminé que les conditions radio ne sont pas rapidement dégradées.

**17.** Entité selon la revendication 16, **caractérisée en ce que** ladite sélection étant basée sur un système de seuils, lesdits seuils ont une première valeur pour déterminer si les conditions radio sont rapidement dégradées, et une deuxième valeur pour déterminer si les conditions radio ne sont pas rapidement dégradées, ladite deuxième valeur étant relativement plus élevée, ou relativement plus faible, que ladite première valeur, suivant que la valeur desdites mesures radio augmente, ou diminue, quand les conditions radio sont dégradées.

**18.** Entité selon l'une des revendications 16 et 17, **caractérisée en ce que** lesdites mesures radio comportent des mesures de BER brut.

**19.** Entité selon l'une des revendications 16 et 17, **caractérisée en ce que** lesdites mesures radio comportent des mesures de SIR.

**20.** Entité selon l'une des revendications 16 et 17, **caractérisée en ce que**, dans le cas où un des schémas de codage possibles a un taux de codage égal à 1, lesdites mesures radio, pour sélectionner un schéma de codage plus robuste à partir dudit schéma de codage ayant un taux de codage égal à 1, comportent des mesures autres que des mesures de BER brut.

**21.** Entité selon l'une des revendications 16 et 17, **caractérisée en ce que**, dans le cas où un des schémas de codage possibles a un taux de codage égal à 1, lesdites mesures radio, pour sélectionner ledit schéma de codage ayant un taux de codage égal à 1 à partir d'un schéma de codage plus robuste, comportent des mesures de BER brut et des mesures autres que des mesures de BER brut.

**22.** Entité selon l'une des revendications 20 et 21, **caractérisée en ce que** lesdites mesures radio autres que des mesures de BER brut comportent des mesures de SIR.

**23.** Entité selon l'une des revendications 20 et 21, **caractérisée en ce que** lesdites mesures radio autres que des mesures de BER brut comportent des mesures de puissance de signal reçu.

**24.** Entité selon l'une des revendications 16 à 23, **caractérisée en ce qu'**elle comporte des myens pour, lorsque la transmission sur la liaison à laquelle est appliquée ladite adaptation de lien est reprise à la suite d'une interruption de transmission, et lorsque lesdites mesures n'ont pas pu être effectuées pendant l'interruption de transmission, sélectionner le schéma de codage et/ou de modulation qui était utilisé avant l'interruption de transmission, dans le cas où la période d'interruption est relativement courte, ou un schéma de codage et/ou de modulation par défaut dans le cas contraire.

**25.** Entité selon la revendication 24, **caractérisée en ce que** ledit schéma de codage et/ou de modulation par défaut est un schéma de codage et/ou de modulation le plus robuste.

**26.** Entité selon l'une des revendications 16 à 25, **caractérisée en ce que** ladite moyenne est obtenue au moyen d'un filtre de type exponentiel défini par un paramètre appelé facteur d'oubli, qui s'exprime directement en fonction de l'intervalle de temps entre deux mesures, ou d'une approximation de cet intervalle de temps.

**27.** Entité selon la revendication 26, **caractérisé en ce que** ledit filtre est défini par des relations du type:

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

où:

- $AV\_M_{n+1}$ est la valeur de ladite moyenne AV_M après une $(n+1)^{ième}$ mesure $m_{n+1}$,
- $\Delta t_n$ désigne l'intervalle de temps entre la $n^{ième}$ et la $(n+1)^{ième}$ mesure, ou une approximation de cet intervalle de temps,
- a est un paramètre définissant ce filtre.

**28.** Entité selon l'une des revendications 16 à 27, **caractérisée en ce que** ladite adaptation de lien est appliquée à une liaison montante.

**29.** Entité selon l'une des revendications 16 à 27, **caractérisée en ce que** ladite adaptation de lien est appliquée à une liaison descendante.

**30.** Station mobile, comportant des moyens d'adaptation de lien, lesdits moyens d'adaptation de lien comportant des moyens de sélection de schéma de codage et/ou de modulation en fonction des conditions radio, lesdites conditions radio étant représentées par une moyenne de résultats de mesures radio, station mobile **caractérisée en ce qu'**elle comporte :

- des moyens pour effectuer une moyenne sur une durée relativement courte, pour sélectionner rapidement un schéma de codage et/ou de modulation plus robuste quand il est déterminé que les conditions radio sont rapidement dégradées,

- des moyens pour effectuer une moyenne sur une durée relativement plus longue, pour sélectionner un schéma de codage et/ou de modulation moins robuste, ou un schéma de codage et/ou de modulation plus robuste quand il est déterminé que les conditions radio ne sont pas rapidement dégradées.

**31.** Station mobile selon la revendication 30, **caractérisée en ce que** ladite sélection étant basée sur un système de seuils, lesdits seuils ont une première valeur pour déterminer si les conditions radio sont rapidement dégradées, et une deuxième valeur pour déterminer si les conditions radio ne sont pas rapidement dégradées, ladite deuxième valeur étant relativement plus élevée, ou relativement plus faible, que ladite première valeur, suivant que la valeur desdites mesures radio augmente, ou diminue, quand les conditions radio sont dégradées.

**32.** Station mobile selon l'une des revendications 30 et 31, **caractérisée en ce que** lesdites mesures radio comportent des mesures de BER brut.

**33.** Station mobile selon l'une des revendications 30 et 31, **caractérisée en ce que** lesdites mesures radio comportent des mesures de SIR.

**34.** Station mobile selon l'une des revendications 30 et 31, **caractérisée en ce que**, dans le cas où un des schémas de codage possibles a un taux de codage égal à 1, lesdites mesures radio, pour sélectionner un schéma de codage plus robuste à partir dudit schéma de codage ayant un taux de codage égal à 1, comportent des mesures autres que des mesures de BER brut.

**35.** Station mobile selon l'une des revendications 30 et 31, **caractérisée en ce que**, dans le cas où un des schémas de codage possibles a un taux de codage égal à 1, lesdites mesures radio, pour sélectionner ledit schéma de codage ayant un taux de codage égal à 1 à partir d'un schéma de codage plus robuste, comportent des mesures de BER brut et des mesures autres que des mesures de BER brut.

**36.** Station mobile selon l'une des revendications 34 et 35, **caractérisée en ce que** lesdites mesures radio autres que des mesures de BER brut comportent des mesures de SIR.

**37.** Station mobile selon l'une des revendications 34 et 35, **caractérisée en ce que** lesdites mesures radio autres que des mesures de BER brut comportent des mesures de puissance de signal reçu.

**38.** Station mobile selon l'une des revendications 30 à 37, **caractérisée en ce qu'**elle comporte des moyens pour, lorsque la transmission sur la liaison à laquelle est appliquée ladite adaptation de lien est reprise à la suite d'une interruption de transmission, et lorsque lesdites mesures n'ont pas pu être effectuées pendant l' interruption de transmission, sélectionner le schéma de codage et/ou de modulation qui était utilisé avant l'interruption de transmission, dans le cas où la période d'interruption est relativement courte, ou un schéma de codage et/ou de modulation par défaut dans le cas contraire.

**39.** Station mobile selon la revendication 38, **caractérisée en ce que** ledit schéma de codage et/ou de modulation par défaut est un schéma de codage et/ou de modulation le plus robuste.

**40.** Station mobile selon l'une des revendications 30 à 39, **caractérisée en ce que** ladite moyenne est obtenue au moyen d'un filtre de type exponentiel défini par un paramètre appelé facteur d'oubli, qui s'exprime directement en fonction de l'intervalle de temps entre deux mesures, ou d'une approximation de cet intervalle de temps.

**41.** Station mobile selon la revendication 40, **caractérisée en ce que** ledit filtre est défini par des relations du type:

$$y_{n+1} = \alpha^{\,\Delta t_n} y_n + 1$$

$$AV\_M_{n+1} = \left(1 - \frac{1}{y_{n+1}}\right) AV\_M_n + \frac{1}{y_{n+1}} m_{n+1}$$

où:

- AV $\_M_{n+1}$ est la valeur de ladite moyenne AV_M après une $(n+1\,1)^{\text{ième}}$ mesure $m_{n+1}$,
- $\Delta t_n$ désigne l'intervalle de temps entre la $n^{\text{ième}}$ et la $(n+1\,1)^{\text{ième}}$ mesure, ou une approximation de cet intervalle de temps,
- a est un paramètre définissant ce filtre.

**42.** Station mobile selon l'une des revendications 30 à 41, **caractérisée en ce que** ladite adaptation de lien est appliquée à une liaison descendante.

**43.** Station mobile selon l'une des revendications 30 à 41, **caractérisée en ce que** ladite adaptation de lien est appliquée à une liaison montante.

**Claims**

**1.** Method of link adaptation in a mobile radiocommunication system, said method including selecting a coding and/or modulation scheme as a function of radio conditions represented by an average of radio measurement results, and said method being essentially **characterised in that** said average includes:

- an average over a relatively short period for rapidly selecting a more rugged coding and/or modulation scheme when it is determined that radio conditions are degraded rapidly, or
- an average over a relatively longer period for selecting a less rugged coding and/or modulation scheme, or a more rugged coding and/or modulation scheme when it is determined that radio conditions are not rapidly degraded.

**2.** Method according to claim 1, **characterised in that** said selection is based on a system of thresholds which have a first value for determining if radio conditions are degraded rapidly and a second value for determining if radio conditions are not degraded rapidly, said second value being relatively higher or relatively lower than said first value according to whether the value of said radio measurements increases or decreases when radio conditions are degraded.

**3.** Method according to either of claims 1 and 2, **characterised in that** said radio measurements include raw BER measurements.

**4.** Method according to either of claims 1 and 2, **characterised in that** said radio measurements include SIR measurements.

**5.** Method according to either of claims 1 and 2, **characterised in that**, if one of the coding schemes has a coding rate equal to 1, said radio measurements for selecting a more rugged coding scheme from said coding scheme having a coding rate equal to 1 include measurements other than raw BER measurements.

**6.** Method according to either of claims 1 and 2, **characterised in that** if one of the coding schemes has a coding rate equal to 1, said radio measurements for selecting said coding scheme having a code rate equal to 1 from a more rugged coding scheme include raw BER measurements and measurements other than raw BER measurements.

**7.** Method according to either of claims 5 and 6, **characterised in that** said radio measurements other than raw BER measurements include SIR measurements.

**8.** Method according to either of claims 5 and 6, **characterised in that** said radio measurements other than raw BER measurements include received signal power level measurements.

**9.** Method according to any of claims 1 to 8, **characterised in that** when transmission resumes on said link to which said link adaptation is applied following an interruption of transmission, and if said measurements have not been able to be effected during the interruption of transmission, the coding and/or modulation scheme that was being used before the interruption of transmission is used if the period of interruption is relatively short or a default coding and/or modulation scheme is used otherwise.

**10.** Method according to claim 9, **characterised in that** said default coding and/or modulation scheme is the most rugged coding and/or modulation scheme.

**11.** Method according to any of claims 1 to 10, **characterised in that** said average is obtained by means of an exponential filter defined by a forget factor parameter that is expressed directly as a function of the time period between two measurements or an approximation thereof.

**12.** Method according to claim 11, **characterised in that** said filter is defined by equations of the following type:

- 

$$y_{n+1} = \alpha^{\Delta t_n} y_n + 1$$

- 

$$AV\_M_{n+1} = \left(1 - \frac{1}{y_{n+1}}\right) AV\_M_n + \frac{1}{y_{n+1}} m_{n+1}$$

in which:

  - $AV\_M_{n+1}$ is the value of AV_M after an $(n+1)^{th}$ measurement $m_{n+1}$,
  - $\Delta t_n$ designates the time interval between the $n^{th}$ measurement and the $(n+1)^{th}$ measurement, or an approximation of that time interval, and
  - a is a parameter defining the filter.

**13.** Mobile radiocommunication system **characterised in that** it includes means for implementing a link adaptation method according to any of claims 1 to 12.

**14.** System according to claim 13, **characterised in that** said link adaptation is applied to an uplink.

**15.** System according to claim 13, **characterised in that** said link adaptation is applied to a downlink.

**16.** Mobile radiocommunication entity including link adaptation means including coding and/or modulation scheme selection means adapted to make a selection as a function of radio conditions represented by an average of radio measurement results, which entity is **characterised in that** it includes:

  - means for averaging over a relatively short period for rapidly selecting a more rugged coding and/or modulation scheme when it is determined that the radio conditions are degraded rapidly,
  - means for averaging over a relatively longer period for selecting a less rugged coding and/or modulation scheme, or a more rugged coding and/or modulation scheme when it is determined that the radio conditions are not rapidly degraded.

**17.** Entity according to claim 16, **characterised in that** said selection is based on a system of thresholds which have a first value for determining if the radio conditions are degraded rapidly and a second value for determining if the radio conditions are not degraded rapidly, said second value being relatively higher or relatively lower than said first value according to whether the value of said radio measurements increases or decreases when the radio conditions are degraded.

**18.** Entity according to either of claims 16 and 17, **characterised in that** said radio measurements include raw BER measurements.

**19.** Entity according to either of claims 16 and 17, **characterised in that** said radio measurements include SIR measurements.

**20.** Entity according to either of claims 16 and 17, **characterised in that**, if one of the coding schemes has a coding rate equal to 1, said radio measurements for selecting a more rugged coding scheme from said coding scheme having a coding rate equal to 1 include measurements other than raw BER measurements.

**21.** Method according to either of claims 16 and 17, **characterised in that** if one of the coding schemes has a coding rate equal to 1, said radio measurements for selecting said coding scheme having a code rate equal to 1 from a more rugged coding scheme include raw BER measurements and measurements other than raw BER measurements.

**22.** Entity according to either of claims 20 and 21, **characterised in that** said radio measurements other than raw BER measurements include SIR measurements.

**23.** Entity according to either of claims 20 and 21, **characterised in that** said radio measurements other than raw BER measurements include received signal power level measurements.

**24.** Entity according to any of claims 16 to 23, **characterised in that** it includes means for, when transmission resumes on said link to which said link adaptation is applied following an interruption of transmission, and if said measurements have not been able to be effected during the interruption of transmission, selecting the coding and/or modulation scheme that was being used before the interruption of transmission is used if the period of interruption is relatively short or a default coding and/or modulation scheme is used otherwise.

**25.** Entity according to claim 24, **characterised in that** said default coding and/or modulation scheme is the most rugged coding and/or modulation scheme.

**26.** Entity according to any of claims 16 to 25, **characterised in that** said average is obtained by means of an exponential filter defined by a forget factor parameter that is expressed directly as a function of the time period between two measurements or an approximation thereof.

**27.** Entity according to claim 26, **characterised in that** said filter is defined by equations of the following type:

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

in which:

- $AV\_M_{n+1}$ is the value of AV_M after an $(n+1)^{th}$ measurement $m_{n+1}$,
- $\Delta t_n$ designates the time interval between the $n^{th}$ measurement and the $(n+1)^{th}$ measurement, or an approximation of that time interval, and
- $\alpha$ is a parameter defining the filter.

**28.** Entity according to any one of claims 16 to 27, **characterised in that** said link adaptation is applied to an uplink.

**29.** Entity according to any one of claims 16 to 27, **characterised in that** said link adaptation is applied to a downlink.

**30.** Mobile station including link adaptation means including coding and/or modulation scheme selection means adapted to make a selection as a function of radio conditions represented by an average of radio measurement results, which mobile station is **characterised in that** it includes:

- means for averaging over a relatively short period for rapidly selecting a more rugged coding and/or modulation scheme when it is determined that the radio conditions are degraded rapidly,
- means for averaging over a relatively longer period for selecting a less rugged coding and/or modulation scheme, or a more rugged coding and/or modulation scheme when it is determined that the radio conditions are not rapidly degraded.

31. Mobile station according to claim 30, **characterised in that** said selection is based on a system of thresholds which have a first value for determining if the radio conditions are degraded rapidly and a second value for determining if the radio conditions are not degraded rapidly, said second value being relatively higher or relatively lower than said first value according to whether the value of said radio measurements increases or decreases when radio conditions are degraded.

32. Mobile station according to either of claims 30 and 31, **characterised in that** said radio measurements include raw BER measurements.

33. Mobile station according to either of claims 30 and 31, **characterised in that** said radio measurements include SIR measurements.

34. Mobile station according to either of claims 30 and 31, **characterised in that**, if one of the coding schemes has a coding rate equal to 1, said radio measurements for selecting a more rugged coding scheme from said coding scheme having a coding rate equal to 1 include measurements other than raw BER measurements.

35. Mobile station according to either of claims 30 and 31, **characterised in that** if one of the coding schemes has a coding rate equal to 1, said radio measurements for selecting said coding scheme having a code rate equal to 1 from a more rugged coding scheme include raw BER measurements and measurements other than raw BER measurements.

36. Mobile station according to either of claims 34 and 35, **characterised in that** said radio measurements other than raw BER measurements include SIR measurements.

37. Mobile station according to either of claims 34 and 35, **characterised in that** said radio measurements other than raw BER measurements include received signal power level measurements.

38. Mobile station according to any of claims 30 to 37, **characterised in that** it includes means for, when transmission resumes on said link to which said link adaptation is applied following an interruption of transmission, and if said measurements have not been able to be effected during the interruption of transmission, selecting the coding and/or modulation scheme that was being used before the interruption of transmission is used if the period of interruption is relatively short or a default coding and/or modulation scheme is used otherwise.

39. Mobile station according to claim 38, **characterised in that** said default coding and/or modulation scheme is the most rugged coding and/or modulation scheme.

40. Mobile station according to any of claims 30 to 39, **characterised in that** said average is obtained by means of an exponential filter defined by a forget factor parameter that is expressed directly as a function of the time period between two measurements or an approximation thereof.

41. Mobile station according to claim 40, **characterised in that** said filter is defined by equations of the following type:

- 

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

in which:

- $AV\_M_{n+1}$ is the value of AV_M after an $(n+1)^{th}$ measurement $m_{n+1}$,

- $\Delta t_n$ designates the time interval between the $n^{th}$ measurement and the $(n+1)^{th}$ measurement, or an approximation of that time interval, and
- a is a parameter defining the filter.

42. Mobile station according to any one of claims 30 to 41, **characterised in that** said link adaptation is applied to an uplink.

43. Mobile station according to any one of claims 30 to 41, **characterised in that** said link adaptation is applied to a downlink.

**Patentansprüche**

1. Verfahren zur Verbindungsanpassung in einem Mobilfunkkommunikationssystem, wobei dieses Verfahren eine Auswahl eines Kodierungs- und/oder Modulationsverfahrens in Abhängigkeit von den Funkbedingungen beinhaltet, wobei besagte Funkbedingungen durch einen Mittelwert von Funkmeßergebnissen repräsentiert werden und wobei dieses Verfahren im wesentlichen **dadurch gekennzeichnet ist, daß** der besagte Mittelwert

   - einen über ein relativ kurzes Zeitintervall ermittelten Mittelwert beinhaltet, um schnell ein robusteres Kodierungs- und/oder Modulationsverfahren auszuwählen, wenn festgestellt wird, daß sich die Funkbedingungen rapide verschlechtern, sowie
   - einen über ein relativ längeres Zeitintervall ermittelten Mittelwert beinhaltet, um ein weniger robustes Kodierungs- und/oder Modulationsverfahren oder ein robusteres Kodierungs- und/oder Modulationsverfahren auszuwählen, wenn festgestellt wird, daß sich die Funkbedingungen nicht rapide verschlechtern.

2. Verfahren gemäß Anspruch 1, **dadurch gekennzeichnet, daß** die besagten Schwellenwerte, wobei die besagte Auswahl auf einem System von Schwellenwerten basiert, einen ersten Wert haben, um festzustellen, ob sich die Funkbedingungen rapide verschlechtern, und einen zweiten Wert, um festzustellen, ob sich die Funkbedingungen nicht rapide verschlechtern, wobei der besagte zweite Wert relativ höher oder relativ niedriger als der besagte erste Wert ist, je nachdem, ob der Wert der besagten Funkmeßergebnisse steigt oder fällt, wenn sich die Funkbedingungen verschlechtern.

3. Verfahren gemäß einem der Ansprüche 1 und 2, **dadurch gekennzeichnet, daß** die besagten Funkmeßergebnisse BER-Bruttowertmessungen beinhalten.

4. Verfahren gemäß einem der Ansprüche 1 und 2, **dadurch gekennzeichnet, daß** die besagten Funkmeßergebnisse SIR-Messungen beinhalten.

5. Verfahren gemäß einem der Ansprüche 1 und 2, **dadurch gekennzeichnet, daß** in dem Fall, daß eines der möglichen Kodierungsverfahren ein Kodierungsverhältnis von 1 aufweist, die besagten Funkmessungen zum Auswählen eines robusteren Kodierungsverfahrens anhand des besagten Kodierungsverfahrens mit einem Kodierungsverhältnis von 1 andere Messungen als BER-Bruttowertmessungen beinhalten.

6. Verfahren gemäß einem der Ansprüche 1 und 2, **dadurch gekennzeichnet, daß** in dem Fall, daß eines der möglichen Kodierungsverfahren ein Kodierungsverhältnis von 1 aufweist, die besagten Funkmessungen zum Auswählen des besagten Kodierungsverfahrens mit einem Kodierungsverhältnis von 1 anhand eines robusteren Kodierungsverfahrens andere Messungen als BER-Bruttowertmessungen beinhalten.

7. Verfahren gemäß einem der Ansprüche 5 und 6, **dadurch gekennzeichnet, daß** die besagten anderen Funkmessungen als BER-Bruttowertmessungen SIR-Messungen beinhalten.

8. Verfahren gemäß einem der Ansprüche 5 und 6, **dadurch gekennzeichnet, daß** die besagten anderen Funkmessungen als BER-Bruttowertmessungen Messungen der Intensität des empfangenen Signals beinhalten.

9. Verfahren gemäß einem der Ansprüche 1 bis 8, **dadurch gekennzeichnet, daß** dann, wenn die Übertragung über die Verbindung, auf welche die besagte Verbindungsanpassung angewandt wird, nach einer Unterbrechung der Verbindung erneut aufgenommen wird und die besagten Messungen während der Unterbrechung der Verbindung nicht durchgeführt werden konnten, das Kodierungs- und/oder Modulationsverfahren ausgewählt wird, das vor der Unterbrechung der Verbindung verwendet wurde, falls die Unterbrechungsdauer relativ kurz ist, oder im gegenteiligen Fall ein Kodierungs- und/oder Modulations-Standardverfahren ausgewählt wird.

10. Verfahren gemäß Anspruch 9, **dadurch gekennzeichnet, daß** das besagte Kodierungs- und/oder Modulations-Standardverfahren ein möglichst robustes Kodierungs- und/oder Modulationsverfahren ist.

11. Verfahren gemäß einem der Ansprüche 1 bis 10, **dadurch gekennzeichnet, daß** der besagte Mittelwert mittels eines Filters vom Exponentialtyp ermittelt wird, das über einen als "Vergessensfaktor" bezeichneten Parameter definiert wird, der eine direkte Funktion des Zeitintervalls zwischen zwei Messungen oder einer Näherung dieses Zeitintervalls ist.

12. Verfahren gemäß Anspruch 11, **dadurch gekennzeichnet, daß** das besagte Filter durch Relationen des Typs

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

definiert ist, in welchen

- $AV\_M_{n+1}$ der Wert des besagten Mittelwertes $AV\_M$ nach einer (n+1)-ten Messung $m_{n+1}$ ist,
- $\Delta t_n$ das Zeitintervall zwischen der n-ten und der (n+1) - ten Messung oder eine Näherung dieses Zeitintervalls bezeichnet und
- $\alpha$ ein Parameter ist, welcher dieses Filter definiert.

13. Mobilfunkkommunikationssystem, **dadurch gekennzeichnet, daß** es Mittel zur Implementierung eines Verfahrens zur Verbindungsanpassung gemäß einem der Ansprüche 1 bis 12 beinhaltet.

14. System gemäß Anspruch 13, **dadurch gekennzeichnet, daß** die besagte Verbindungsanpassung auf eine Aufwärtsverbindung angewandt wird.

15. System gemäß Anspruch 13, **dadurch gekennzeichnet, daß** die besagte Verbindungsanpassung auf eine Abwärtsverbindung angewandt wird.

16. Mobilfunkkommunikations-Netzeinheit, beinhaltend Mittel zur Verbindungsanpassung, wobei besagte Mittel zur Verbindungsanpassung Mittel zur Auswahl eines Kodierungs- und/oder Modulationsverfahrens in Abhängigkeit von den Funkbedingungen beinhalten, wobei die besagten Funkbedingungen durch einen Mittelwert von Funkmeßergebnissen repräsentiert werden und die Einheit im wesentlichen **dadurch gekennzeichnet ist, daß** sie

- Mittel zur Ermittlung eines Mittelwertes über ein relativ kurzes Zeitintervall beinhaltet, um schnell ein robusteres Kodierungs- und/oder Modulationsverfahren auszuwählen, wenn festgestellt wird, daß sich die Funkbedingungen rapide verschlechtern, sowie
- Mittel zur Ermittlung eines Mittelwertes über ein relativ längeres Zeitintervall beinhaltet, um ein weniger robustes Kodierungs- und/oder Modulationsverfahren oder ein robusteres Kodierungs- und/oder Modulationsverfahren auszuwählen, wenn festgestellt wird, daß sich die Funkbedingungen nicht rapide verschlechtern.

17. Einheit gemäß Anspruch 16, **dadurch gekennzeichnet, daß** die besagten Schwellenwerte, wobei die besagte Auswahl auf einem System von Schwellenwerten basiert, einen ersten Wert haben, um festzustellen, ob sich die Funkbedingungen rapide verschlechtern, und einen zweiten Wert, um festzustellen, ob sich die Funkbedingungen nicht rapide verschlechtern, wobei der besagte zweite Wert relativ höher oder relativ niedriger als der besagte erste Wert ist, je nachdem, ob der Wert der besagten Funkmeßergebnisse steigt oder fällt, wenn sich die Funkbedingungen verschlechtern.

18. Einheit gemäß einem der Ansprüche 16 und 17, **dadurch gekennzeichnet, daß** die besagten Funkmessungen BER-Bruttowertmessungen beinhalten.

19. Einheit gemäß einem der Ansprüche 16 und 17, **dadurch gekennzeichnet, daß** die besagten Funkmessungen SIR-Messungen beinhalten.

20. Einheit gemäß einem der Ansprüche 16 und 17, **dadurch gekennzeichnet, daß** in dem Fall, daß eines der möglichen Kodierungsverfahren ein Kodierungsverhältnis von 1 aufweist, die besagten Funkmessungen zum Auswählen eines robusteren Kodierungsverfahrens anhand des besagten Kodierungsverfahrens mit einem Kodierungsverhältnis von 1 andere Messungen als BER-Bruttowertmessungen beinhalten.

21. Einheit gemäß einem der Ansprüche 16 und 17, **dadurch gekennzeichnet, daß** in dem Fall, daß eines der möglichen Kodierungsverfahren ein Kodierungsverhältnis von 1 aufweist, die besagten Funkmessungen zum Auswählen des besagten Kodierungsverfahrens mit einem Kodierungsverhältnis von 1 anhand eines robusteren Kodierungsverfahrens BER-Bruttowertmessungen und andere Messungen als BER-Bruttowertmessungen beinhalten.

22. Einheit gemäß einem der Ansprüche 20 und 21, **dadurch gekennzeichnet, daß** die besagten anderen Funkmessungen als die BER-Bruttowertmessungen SIR-Messungen beinhalten.

23. Einheit gemäß einem der Ansprüche 20 und 21, **dadurch gekennzeichnet, daß** die besagten anderen Funkmessungen als die BER-Bruttowertmessungen Messungen der Intensität des empfangenen Signals beinhalten.

24. Einheit gemäß einem der Ansprüche 16 bis 23, **dadurch gekennzeichnet, daß** diese Mittel beinhaltet, um immer dann, wenn die Übertragung über die Verbindung, auf welche die besagte Verbindungsanpassung angewandt wird, nach einer Unterbrechung der Verbindung erneut aufgenommen wird und die besagten Messungen während der Unterbrechung der Verbindung nicht durchgeführt werden konnten, das Kodierungs- und/oder Modulationsverfahren auszuwählen, das vor der Unterbrechung der Verbindung verwendet wurde, falls die Unterbrechungsdauer relativ kurz ist, oder im gegenteiligen Fall ein Kodierungs- und/oder Modulations-Standardverfahren auszuwählen.

25. Einheit gemäß Anspruch 24, **dadurch gekennzeichnet, daß** das besagte Kodierungs- und/oder Modulations-Standardverfahren ein möglichst robustes Kodierungs- und/oder Modulationsverfahren ist.

26. Einheit gemäß einem der Ansprüche 16 bis 25, **dadurch gekennzeichnet, daß** der besagte Mittelwert mittels eines Filters vom Exponentialtyp ermittelt wird, das über einen als "Vergessensfaktor" bezeichneten Parameter definiert wird, der eine direkte Funktion des Zeitintervalls zwischen zwei Messungen oder einer Näherung dieses Zeitintervalls ist.

27. Einheit gemäß Anspruch 26, **dadurch gekennzeichnet, daß** das besagte Filter durch Relationen des Typs

•

$$y_{n+1} = \alpha^{\Delta t_n} y_n + 1$$

•

$$AV\_M_{n+1} = \left(1 - \frac{1}{y_{n+1}}\right) AV\_M_n + \frac{1}{y_{n+1}} m_{n+1}$$

definiert ist, in welchen

- AV_$M_{n+1}$ der Wert des besagten Mittelwertes AV_M nach einer (n+1)-ten Messung $m_{n+1}$ ist,
- $\Delta t_n$ das Zeitintervall zwischen der n-ten und der (n+1)-ten Messung oder eine Näherung dieses Zeitintervalls bezeichnet und
- $\alpha$ ein Parameter ist, welcher dieses Filter definiert.

**28.** Einheit gemäß einem der Ansprüche 16 bis 27, **dadurch gekennzeichnet, daß** die besagte Verbindungsanpassung auf eine Aufwärtsverbindung angewandt wird.

**29.** Einheit gemäß einem der Ansprüche 16 bis 27, **dadurch gekennzeichnet, daß** die besagte Verbindungsanpassung auf eine Abwärtsverbindung angewandt wird.

**30.** Mobilstation, beinhaltend Mittel zur Verbindungsanpassung, wobei besagte Mittel zur Verbindungsanpassung Mittel zur Auswahl eines Kodierungs- und/oder Modulationsverfahrens in Abhängigkeit von den Funkbedingungen beinhalten, wobei die besagten Funkbedingungen durch einen Mittelwert von Funkmeßergebnissen repräsentiert werden und die Mobilstation **dadurch gekennzeichnet ist, daß** sie

- Mittel zur Ermittlung eines Mittelwertes über ein relativ kurzes Zeitintervall beinhaltet, um schnell ein robusteres Kodierungs- und/oder Modulationsverfahren auszuwählen, wenn festgestellt wird, daß sich die Funkbedingungen rapide verschlechtern, sowie
- Mittel zur Ermittlung eines Mittelwertes über ein relativ längeres Zeitintervall beinhaltet, um ein weniger robustes Kodierungs- und/oder Modulationsverfahren oder ein robusteres Kodierungs- und/oder Modulationsverfahren auszuwählen, wenn festgestellt wird, daß sich die Funkbedingungen nicht rapide verschlechtern.

**31.** Mobilstation gemäß Anspruch 30, **dadurch gekennzeichnet, daß** die besagten Schwellenwerte, wobei die besagte Auswahl auf einem System von Schwellenwerten basiert, einen ersten Wert haben, um festzustellen, ob sich die Funkbedingungen rapide verschlechtern, und einen zweiten Wert, um festzustellen, ob sich die Funkbedingungen nicht rapide verschlechtern, wobei der besagte zweite Wert relativ höher oder relativ niedriger als der besagte erste Wert ist, je nachdem, ob der Wert der besagten Funkmeßergebnisse steigt oder fällt, wenn sich die Funkbedingungen verschlechtern.

**32.** Mobilstation gemäß einem der Ansprüche 30 und 31, **dadurch gekennzeichnet, daß** die besagten Funkmeßergebnisse BER-Bruttowertmessungen beinhalten.

**33.** Mobilstation gemäß einem der Ansprüche 30 und 31, **dadurch gekennzeichnet, daß** die besagten Funkmeßergebnisse SIR-Messungen beinhalten.

**34.** Mobilstation gemäß einem der Ansprüche 30 und 31, **dadurch gekennzeichnet, daß** in dem Fall, daß eines der möglichen Kodierungsverfahren ein Kodierungsverhältnis von 1 aufweist, die besagten Funkmessungen zum Auswählen eines robusteren Kodierungsverfahrens anhand des besagten Kodierungsverfahrens mit einem Kodierungsverhältnis von 1 andere Messungen als BER-Bruttowertmessungen beinhalten.

**35.** Mobilstation gemäß einem der Ansprüche 30 und 31, **dadurch gekennzeichnet, daß** in dem Fall, daß eines der möglichen Kodierungsverfahren ein Kodierungsverhältnis von 1 aufweist, die besagten Funkmessungen zum Auswählen des besagten Kodierungsverfahrens mit einem Kodierungsverhältnis von 1 anhand eines robusteren Kodierungsverfahrens BER-Bruttowertmessungen und andere Messungen als BER-Bruttowertmessungen beinhalten.

**36.** Mobilstation gemäß einem der Ansprüche 34 und 35, **dadurch gekennzeichnet, daß** die besagten anderen Funkmessungen als BER-Bruttowertmessungen SIR-Messungen beinhalten.

**37.** Mobilstation gemäß einem der Ansprüche 34 und 35, **dadurch gekennzeichnet, daß** die besagten anderen Funkmessungen als die BER-Bruttowertmessungen Messungen der Intensität des empfangenen Signals beinhalten.

**38.** Mobilstation gemäß einem der Ansprüche 30 bis 37, **dadurch gekennzeichnet, daß** diese Mittel beinhaltet, um immer dann, wenn die Übertragung über die Verbindung, auf welche die besagte Verbindungsanpassung angewandt wird, nach einer Unterbrechung der Verbindung erneut aufgenommen wird und die besagten Messungen während der Unterbrechung der Verbindung nicht durchgeführt werden konnten, das Kodierungs- und/oder Modulationsverfahren auszuwählen, das vor der Unterbrechung der Verbindung verwendet wurde, falls die Unterbrechungsdauer relativ kurz ist, oder im gegenteiligen Fall ein Kodierungs- und/oder Modulations-Standardverfahren auszuwählen.

**39.** Mobilstation gemäß Anspruch 38, **dadurch gekennzeichnet, daß** das besagte Kodierungs- und/oder Modulations-Standardverfahren ein möglichst robustes Kodierungs- und/oder Modulationsverfahren ist.

**40.** Mobilstation gemäß einem der Ansprüche 30 bis 39, **dadurch gekennzeichnet, daß** der besagte Mittelwert mittels eines Filters vom Exponentialtyp ermittelt wird, das über einen als "Vergessensfaktor" bezeichneten Parameter definiert wird, der eine direkte Funktion des Zeitintervalls zwischen zwei Messungen oder einer Näherung dieses Zeitintervalls ist.

**41.** Mobilstation gemäß Anspruch 40, **dadurch gekennzeichnet, daß** das besagte Filter durch Relationen des Typs

$$y_{n+1} = \alpha^{\Delta t_n} y_n + 1$$

$$AV\_M_{n+1} = \left(1 - \frac{1}{y_{n+1}}\right) AV\_M_n + \frac{1}{y_{n+1}} m_{n+1}$$

definiert ist, in welchen

- $AV\_M_{n+1}$ der Wert des besagten Mittelwertes AV_M nach einer (n+1)-ten Messung $m_{n+1}$ ist,
- $\Delta t_n$ das Zeitintervall zwischen der n-ten und der (n+1)-ten Messung oder eine Näherung dieses Zeitintervalls bezeichnet und
- $\alpha$ ein Parameter ist, welcher dieses Filter definiert.

**42.** Mobilstation gemäß einem der Ansprüche 30 bis 41, **dadurch gekennzeichnet, daß** die besagte Verbindungsanpassung auf eine Abwärtsverbindung angewandt wird.

**43.** Mobilstation gemäß einem der Ansprüche 30 bis 41, **dadurch gekennzeichnet, daß** die besagte Verbindungsanpassung auf eine Aufwärtsverbindung angewandt wird.

# FIG_1

| CSi | CS$_i$ -->CS$_{i+1}$ | CS$_i$ -->CS$_{i-1}$ |
|---|---|---|
| CS1 | AV_RXQUAL_LT< CS_QUAL_UL_1_2 | Impossible |
| CS2 | AV_RXQUAL_LT< CS_QUAL_UL_2_3 | AV_RXQUAL_LT>CS_QUAL_UL_1_2+CS_HST_UL_LT<br>OU<br>AV_RXQUAL_ST>CS_QUAL_UL_1_2+CS_HST_UL_ST |
| CS3 | AV_RXQUAL_LT<CS_QUAL_UL_3_4 | AV_RXQUAL_LT>CS_QUAL_UL_2_3+CS_HST_UL_LT<br>OU<br>AV_RXQUAL_ST>CS_QUAL_UL_2_3+CS_HST_UL_ST |
| CS4 | Impossible | AV_RXQUAL_LT>CS_QUAL_UL_3_4+CS_HST_UL_LT<br>OU<br>AV_RXQUAL_ST>CS_QUAL_UL_3_4+CS_HST_UL_ST |

EP 1 199 831 B1

## FIG_2

| $CSi$ | $CS_i \rightarrow CS_{i+1}$ | $CS_i \rightarrow CS_{i-1}$ |
|---|---|---|
| CS1 | AV_RXQUAL_LT < CS_QUAL_DL_1_2 | Impossible |
| CS2 | AV_RXQUAL_LT < CS_QUAL_DL_2_3 | AV_RXQUAL_LT > CS_QUAL_DL_1_2+CS_HST_DL_LT<br>ou<br>AV_RXQUAL_ST > CS_QUAL_DL_1_2+CS_HST_DL_ST |
| CS3 | AV_RXQUAL_LT < CS_QUAL_DL_3_4<br>AV_SIR > CS_SIR_DL_3_4 | AV_RXQUAL_LT > CS_QUAL_DL_2_3+CS_HST_DL_LT<br>ou<br>AV_RXQUAL_ST > CS_QUAL_DL_2_3+CS_HST_DL_ST |
| CS4 | Impossible | AV_SIR < CS_SIR_DL_3_4+CS_SIR_HST_DL |

EP 1 199 831 B1